# EUROPÄISCHE PATENTSCHRIFT

(11) **EP 1 268 601 B1**
(45) Veröffentlichungstag und Bekanntmachung des Hinweises auf die Patenterteilung: **10.08.2005**
(21) Anmeldenummer: 01902389.4
(22) Anmeldetag: 02.02.2001
(51) Int. Cl.: C08G 18/80

(54) **ALKOHOL-BLOCKIERTE POLYISOCYANATE FÜR COIL COATING**
ALCOHOL-BLOCKED POLYISOCYANATES FOR COIL COATING
POLYISOCYANATES BLOQUES A L'ALCOOL POUR L'ENDUCTION EN CONTINU DE BANDES

(30) Priorität: 15.02.2000 DE 10006649
(43) Veröffentlichungstag der Anmeldung: 02.01.2003
(73) Patentinhaber: Bayer MaterialScience AG, 51368 Leverkusen (DE)
(72) Erfinder: KÖNIG, Eberhard, 51375 Leverkusen (DE); NOBLE, Karl-Ludwig, 51467 Bergisch Gladbach (DE); FÜSSEL, Christian, 47918 Tönisvorst (DE); JÜRGENS, Eberhard, 50735 Köln (DE)
(86) Internationale Anmeldenummer: PCT/EP2001/001118
(87) Internationale Veröffentlichungsnummer: WO 2001/060886

(56) Entgegenhaltungen:
- EP-A- 0 045 996
- EP-A- 0 319 709
- DE-A- 4 229 183
- DE-A- 19 748 764
- US-A- 5 621 064

## Beschreibung

Die Erfindung betrifft neue blockierte, aliphatische Polyisocyanat-Vernetzer und deren Verwendung in Einkomponenten-Einbrennlacken, insbesondere für das Coil Coating-Verfahren.

Die Formulierung von blockierten Polyisocyanaten mit OH-haltigen Polykondensaten bzw. Polymerisaten (Polyester bzw. Polyacrylaten) zu Bindemitteln für "einkomponentige" Einbrennlacke ist Stand der Technik. Ein bewährtes Isocyanatblockierungsmittel stellt dabei Butanonoxim dar, weil es hinsichtlich seiner Eigenschaften ein gutes Preis-Leistungsverhältnis bietet. Butanonoxim wird seit kurzem in physiologischer Hinsicht kritisch betrachtet. Es besteht daher dringender Bedarf Butanonoxim durch physiologisch weniger bis unbedenkliche Blockierungsmittel zu ersetzen.

Es ist bekannt, dass Alkohole mit Isocyanaten zu der thermisch sehr stabilen Urethangruppe abreagieren. Dies bedeutet andererseits, dass mit Alkohol blockierte Isocyanate sehr hohe Einbrenntemperaturen benötigen, um das Isocyanat wieder zu regenerieren. Sehr hohe Einbrenntemperaturen werden bei der Draht- und der Elektrotauchlackierung (KTL) eingesetzt. In diesen Anwendungsgebieten kommen aromatische Polyisocyanate, die mit Alkoholen blockiert sind, zum Einsatz. Beispielhaft für KTL-Lacke mit einer Alkoholblockierung der Isocyanat-Vernetzer seien z.B. folgende neuere Patentanmeldungen genannt: EP-A 0 677 539 und WO 96/12771. In einer anderen Patentanmeldung (EP-A 0 319 709) werden Alkohol-blockierte Vemetzer für Elektrotauchlacke mit niedriger Einbrenntemperatur, immerhin noch "unter 160°C und ≤ 30 min" beschrieben. Durch Verwendung spezieller Alkohole, z.B. Furfurylalkohol, kommt hier die Absenkung der Einbrenntemperatur zustande. Andererseits muss man berücksichtigen, dass für den Fall blockierter, lichtechter, aliphatischer Polyisocyanate die Einbrenntemperatur wieder um ca. 10°C heraufgesetzt werden muss, da diese schlechter die NCO-Gruppe freigeben als aromatische.

Für das Coil Coating-Verfahren, das zwar mit hohen Temperaturen aber sehr kurzen Verweilzeiten arbeitet, z.B. mit einer Objekttemperatur von 232°C und einer Verweilzeit von 35 sec, sind bisher keine Alkohol-blockierten Polyisocyanat-Vernetzer bekannt geworden. Butanonoxim war hier das Blockierungs- und Abspaltmittel der Wahl, weil es, wie auch das letzte Beispiel erläutert, relativ leicht aus der Isocyanatbindung zu verdrängen ist.

Es war daher Aufgabe der Erfindung, Bedingungen zu entwickeln, unter denen man Alkohol-blockierte aliphatische Polyisocyanate als Coil Coating-Lacke einsetzen kann.

Diese Aufgabe wurde mit den erfindungsgemäßen Produkten gelöst.

Gegenstand der Erfindung sind Coil Coating-Lackbindemittel aus mit aliphatischen Alkoholen blockierten, aliphatischen Polyisocyanaten und organischen Polyhydroxylverbindungen, dadurch gekennzeichnet, dass
a) der aliphatische Alkohol einen Siedepunkt bis zu 120°C besitzt und
b) das Lackbindemittel 1,2 bis 4,0 Gew.-%, vorzugsweise 1,5 bis 2,5 Gew.-%, bezogen auf den Festkörper der Bindemittelkomponenten, an Katalysatoren aus der Gruppe der 4-wertigen organischen Zinnverbindungen enthält.

Erfindungswesentlich beim erfindungsgemäßen Coil Coating-Bindemittel ist die Blockierung des aliphatischen Polyisocyanats mit aliphatischem Alkohol in Verbindung mit Art und Menge des Katalysators, nämlich 1,5 bis 2,5 Gew.-%, bevorzugt 2,0 Gew.-% an organischen Zinn (IV)-Verbindungen, bezogen auf den Festkörper von Vernetzer und Polyhydroxylverbindung.

Ein erfindungsgemäßer Coil Coating-Lack setzt sich (z.B. Beispiel 4) aus den Bindemittelkomponenten, einem Katalysator, einem Pigment, diversen Verlauf- und Lösemitteln zusammen.

Die Bindemittelkomponenten eines erfindungsgemäßen Coil Coating-Lackes bestehen aus einem erfindungsgemäßen blockierten Polyisocyanat-Vernetzer und mindestens einem handelsüblichen, polyfunktionelle Hydroxylgruppen tragendem Harz, z.B. einem Polyester und/oder einem Polyacrylat als Polyhydroxylverbindung.

Für die erfindungsgemäßen Vemetzer kommen die an sich bekannten Biuret-, Isocyanurat-, Allophanat-, Iminooxadiazindion (asymmetrisches Trimeres)-, Urethan- und/oder Uretdiongruppen aufweisenden Lackpolyisocyanate auf Basis von (cyclo)-aliphatischen Diisocyanaten mit einem NCO-Gehalt von 12 bis 25 Gew.-% in Betracht. Beispiele für aliphatische bzw. cycloaliphatische Diisocyanate sind 1,6-Diisocyanatohexan (HDI), 1-Isocyanato-3,3,5-trimethyl-5-isocyanatomethyl-cyclohexan(Isophorondiisocyanat, IPDI), Bis-(4-isocyanatocyclohexyl)-methan (H₁₂ MDI bzw. Desmodur W®/Bayer AG), 2,6-bzw. 2,5-Bisisocyanato-norbornan oder 1,4-Bisisocyanatomethyl-cyclohexan. Bevorzugt sind überwiegend Isocyanuratgruppen enthaltenden Polyisocyanate auf Basis von 1,6-Diisocyanatohexan, IPDI und Desmodur W®.

Als Blockierungsmittel für erfindungsgemäß einsetzbare Polyisocyanate kommen niedrigsiedende, aliphatische Alkohole in Betracht, z.B. geradkettig oder verzweigte oder cycloaliphatische C₁-C₅ aliphatische Alkohle, bevorzugt Methanol, Ethanol, Propanol, Isopropanol, Butanol (Kp. 117°C), Isobutanol (Kp. 107°C) oder Pentanol-(2) (Kp. 116°C) in Betracht. Besonders bevorzugt ist Ethanol. Es können auch Mischungen der Alkohole eingesetzt werden.

Als Katalysatoren kommen erfindungsgemäß 4-wertige organische Zinnverbindungen in Betracht. Beispiele hierfür sind vorzugsweise Dibutylzinndilaurat (DBTL), Dibutylzinndiacetat, Dibutylzinnmaleat oder Tetrabutylstannoxandiacetat. Besonders bevorzugt ist der sogenannte ®Swedstab OTO-133 (von AWL Scandinavia AB), bestehend aus:

| | |
|---|---|
| 35 - 45 Gew.-% | Monooctylzinn-triisooctylthioglykolat |
| 30 - 40 Gew.-% | Dioctylzinn-diisooctylthioglykolat |
| 1 -5 Gew.-% | Monobutylzinn-triisooctylthioglycolat |
| 1 Gew.-% | Bisphenol A |
| **100 Gew.-%** | **OTO-133** |

Diese Zinnkatalysatoren werden einem Coil Coating-Lack mit dem erfindungsgemäßen Vernetzer in einer Menge von 1,2 bis 4,0 Gew.-%, bevorzugt 1,5 bis 2,5 Gew.-%, besonders bevorzugt 2,0 Gew.-%, bezogen auf den Festkörperanteil des Bindemittels, d. h. Vernetzer und OH-haltiges Harz, hinzugemischt.

Die Dosierung der Bindemittelkomponenten des Coil Coating-Lackes erfolgt im äquivalenten Verhältnis der funktionellen Gruppen, so dass gilt: **blockierte NCO-Gruppen : OH-Gruppen = 1 : 1.**

Die neuen Polyisocyanat-Vernetzer mit der Alkoholblockierung stellen eine gute Alternative zu Butanonoxim-blockierten Vemetzem für Coil Coating-Lacke dar. Zwar ist die Reaktivität der neuen Vemetzer nicht ganz so gut wie die der Butanonoxim-blockierten, dafür ergeben sich aber Vorteile in der Vergilbungsbeständigkeit. Sowohl die Weißwerte beim Einbrennen als auch beim Überbrennen bzw. Tempern sind besser.

Sie werden vorzugsweise zur Lackierung von Blechen eingesetzt.

### Beispiele

### Beispiel 1 (erfindungsgemäß)

Herstellung eines mit Ethanol blockierten Polyisocyanat-Vernetzers.

### a) Ansatz

| | |
|---|---|
| 196,0 g (1,0 val) | eines isocyanurathaltigen Lackpolyisocyanates auf Basis von 1,6-Diisocyanatohexan (HDI) mit einem NCO-Gehalt von 21,4 Gew.-%, einer Viskosität bei 23°C von ca. 3000 mPas und einer Funktionalität von ca. 3,5 |
| 50,6 g (1,1 mol) | Ethanol (Kp. 78°C) |
| 82,2 g | Solventnaphta 100 |
| **328,8 g (1,0 val)** | **blockierte NCO-Gruppen** |

| | |
|---|---|
| Festkörpergehalt | 242 g, 73,6 Gew.-% |
| Aussehen | farblos, klar |
| Viskosität (23°C) | ca. 1450 mPas |
| blockierter NCO-Gehalt | Ber. 12,7 Gew.-% |
| 1 val blockierte NCO-Gruppen | 328,8 g |

### b) Durchführung

Polyisocyanat und Lösemittel werden unter Rühren bei ca. 40°C vorgelegt. Man tropft Ethanol so hinzu, dass trotz der exothermen Reaktion die Innentemperatur 85°C nicht übersteigt. Nach ca. 1 Stunde Eintropfzeit und ½ Stunde Nachrührzeit bei 85°C ist kein NCO-Gehalt mehr nachweisbar (IR-Spektrum). Man lässt erkalten, füllt ab und erhält die oben charakterisierte blockierte Vemetzerlösung mit einem blockierten NCO-Äquivalent von 328,8 g.

### Beispiel 2 (erfindungsgemäß)

Herstellung eines mit Isopropanol blockierten Polyisocyanat-Vernetzers.

### a) Ansatz

| | |
|---|---|
| 196,0 g (1,0 val) | eines isocyanurathaltigen Lackpolyisocyanates auf Basis von 1,6-Diisocyanatohexan (HDI), vergl. Beispiel 1, trimerisiertes HDI mit einem NCO-Gehalt von 21,4 Gew.-% |
| 66,0 g (1,1 mol) | Isopropanol (Kp. 82°C) |
| 79,4 g | 1-Methoxy-propylacetat |
| **341,4 g (1,0 val)** | **blockierte NCO-Gruppen** |

| | |
|---|---|
| Festkörpergehalt | 256 g, 75,0 Gew.-% |
| Aussehen | farblos, klar |
| Viskosität (23°C) | ca. 1400 mPas |
| blockierter NCO-Gehalt | Ber. 12,3 Gew.-% |
| 1 val blockierte NCO-Gruppen | 341,4 g |

### b) Durchführung

Es wird analog der in Beispiel 1b) beschriebenen Methode gearbeitet.

### Beispiel 3 (erfindungsgemäß)

Herstellung eines mit Isobutanol blockierten Polyisocyanat-Vernetzers.

### a) Ansatz

| | |
|---|---|
| 196,0 g (1,0 val) | eines trimerisierten HDI gemäß Beispiel 1a) mit einem NCO-Gehalt von 21,4 Gew.-% |
| 81,4 g (1,1 mol) | Isobutanol (Kp. 107°C) |
| 82,6 g | 1-Methoxy-propylacetat |
| **360,0 g (1,0 val)** | **blockierte NCO-Gruppen** |

| | |
|---|---|
| Festkörpergehalt | 270 g, 75,0 Gew.-% |
| Aussehen | farblos, klar |
| Viskosität (23°C) | ca. 1100 mPas |
| blockierter NCO-Gehalt | Ber. 11,7 Gew.-% |
| 1 val blockierte NCO-Gruppen | 360,0 g |

### b) Durchführung

Die im Ansatz aufgelisteten Komponenten werden, wie im Beispiel 1b) beschrieben, zu dem mit Isobutanol blockierten Vemetzer mit einem blockierten NCO-Äquivalent von 360 g verarbeitet.

### Beispiel 4 (erfindungsgemäß)

Es wird die Herstellung eines Coil Coating Weißlackes mit dem Vemetzer gemäß Beispiel 1 sowie dessen Verarbeitungsbedingungen und Eigenschaften beschrieben.

### a) Lackherstellung

| **Bindemittelkomponenten** | **Menge [g]** | **Festkörpergehalt [g]** | **Äquivalente** | **Gew.-%** |
|---|---|---|---|---|
| i) blockierter NCO-Vernetzer gemäß Beispiel 1 | 147,6 | 108,6 | 0,449 val NCO | - |
| ii) Hydroxylpolyester Alkynol® 1665¹⁾ | 449,0 | 291,8 | 0,449 val OH | - |
| Swedstab OTO-133²⁾ 10 Gew.-% in Solventnaphta³⁾ 200 S | 80,0 | 8,0 | - | 2 bez. auf Fk. i)+ii) |
| **Summe Bindemittelkomp.** | **676,6** | | | |

| | | | | |
|---|---|---|---|---|
| ¹⁾ Alkynol® 1665, Hydroxylpolyester, 65 %ig in Solventnaphta 100/Isobutanol, 1,7 Gew.-% OH-Gruppen, OH-Äquivalent = 1000 g, Bayer AG | | | | |
| ²⁾ Swedstab OTO-133, Mischung aus: ca. 45 % Monooctyltin-triisooctyl-thioglycolate ca.40 % Dioctyltin-diisooctyl-thioglycolate ca.4 % Monobutyltin-triisooctyl-thioglycolate 1 % Bis-Phenol A AWL Scandinavia AB, Malmö/Schweden | | | | |
| ³⁾ Solventnaphta, Deutsche Exxon Chemical GmbH, Köln | | | | |

Im nachfolgenden Weißlack ist obiges Bindemittel enthalten. Der blockierte NCO-Vernetzer (Beispiel 1) und der Hydroxylpolyester liegen im NCO:OH-Verhältnis von 1:1 vor. Um die Aushärtung des Bindemittels zu ermöglichen, sind 2 Gew.-% (bezogen auf die funktionellen Bindemittelkomponenten/Festkörper) an obiger Mischung an vierwertigen Zinn-Katalysatoren enthalten.

Summe Bindemittelkomponenten (s. oben) 676,6 g Weitere Lackkomponenten sind:

| | |
|---|---|
| TiO₂-Kronos 2330⁴⁾ | 402,4 g |
| Solventnaphta 200³⁾ | 107,5 g |
| Acronal 4F⁵⁾, 50 %ig in SN 200 S³⁾ | 20,1 g |
| CAB 531-1⁶⁾, 10 %ig in SN 200 S³⁾ | 100,0 g |
| Solventnaphta 200 S³⁾ | 33,4 g |
| **Summe Lackkomponenten** | **1340,0 g** |

| | |
|---|---|
| ⁴⁾ Weißpigment, Kronos International, Leverkusen | |
| ⁵⁾ Verlaufmittel + Entschäumer, Polybutylacrylat, BASF, Ludwigshafen | |
| ⁶⁾ CAB 531-1, Celluloseacetobutyrat, Krahn Chemie Hamburg, Hersteller: Eastman Kingsport, USA | |

Der obige Weißlack wird bereitet, indem eine Anreibung aus dem Polyester, Titandioxidpigment und Solventnaphta 200 mit den übrigen Komponenten homogen vermischt wird. Dieser Lack hat eine Auslaufzeit im DIN 4-Becher von 120 sec.

### b) Lackhärtung und Ausprüfung

Obiger Lack wird durch Rakeln auf chromatierte Aluminiumbleche (1 mm dick) aufgetragen. Die Trockenschichtdicke beträgt 19 bis 22 µm. Sofort nach dem Lackauftrag werden die Bleche im Aalborgofen auf dem Drehteller bei einer Ofentemperatur von 350°C und variabler Verweildauer eingebrannt.

Bei einer Verweildauer von 41 sec resultiert eine peak metal temperature (PMT, Objekttemperatur) von 241 °C. Der solcherart gehärtete Lack besitzt folgende Eigenschaften:

**Tabelle**

| **Lackeigenschaften** | |
|---|---|
| Glanz n. Gardener 20/60° analog ECCA-T2¹⁾ | 77 / 90 |
| Mikrohärte (10 g - 30 sec) | 6,6/6,0 |
| Impact-Test (inch/lbs) analog ECCA-T5 | 80 |
| Haftfestigkeit 6 mm Erichsentiefung im Gitterschnitt ECCA-T6 | 0 |
| T-bend Test T 0,0 0 = bester Wert | Risse 0 Haftung 0 |
| Weißgrad nach Berger | 96,3 |
| Weißgrad nach Berger bei PMT > 254°C | 94,2 |
| Nachreißtest 10' 100°C | T 1,0 (gut) |
| Methylethylketon (MEK)-Wischtest, Doppelhübe, ECCA¹⁾ T11 und DIN EN 12720 | 100 |

| | |
|---|---|
| ¹⁾ECCA = European Coil Coating Association | |

Wie man aus obiger Tabelle sieht, werden die Forderungen an einem Coil Coating-Weißlack gut bestanden.

### Beispiel 5 (erfindungsgemäß)

Es werden Coil Coating-Weißlacke mit den verschiedenen Vemetzem der Beispiele 1 bis 3 verglichen. Variiert wird dabei noch die Katalysatorart und die Objekttemperatur.

Lack 1a) entspricht dem Beispiel 4. Lack 1b) entspricht Lack 1a) bis auf die Katalysatorart. Anstelle Swedstab OTO-133 wird Dibutylzinndilaurat (DBTL) verwendet. Lack 2 und 3 enthalten jeweils die mit Isopropanol bzw. Isobutanol blockierten Vernetzer gemäß den Beispielen 2 und 3. Die ausreichende Vernetzung dieser Lacke bei unterschiedlichen Einbrennbedingungen wird mit dem MEK-Wischtest (ECCA T11 und DIN EN 12720) ermittelt. Widersteht der Lack 100 MEK-Doppelhüben ohne Beschädigung, dann ist der Lack ausreichend vernetzt bzw. ausreagiert.

| **Lack** | **1a** | **1b** | **2a** | **2b** | **3a** | **3b** |
|---|---|---|---|---|---|---|
| Blockierungsmittel | Ethanol | | Isopropanol | | Isobutanol | |
| Swedstab OTO-133 | 2 Gew.-% | - | 2 Gew.-% | - | 2 Gew.-% | - |
| DBTL | - | 2 Gew.-% | - | 2 Gew.-% | - | 2 Gew.-% |
| Reaktivität (MEK-Wischtest) bei PMT 241°C / 41 sec | 100 | 100 | 100 | 100 | 100 | 100 |
| PMT 232°C / 38 sec | 100 | 15 | 70 | 5 | 80 | 5 |
| PMT 224°C / 35 sec | 100 | - | 10 | - | 10 | - |

Wie man erkennt, ist Ethanol das "reaktivste" Blockierungsmittel von den untersuchten Alkoholen und Swedstab OTO-133 der wirksamere Katalysator, denn Lack 1a) besteht den MEK-Wischtest bei einer Objekttemperatur von 224°C und einer Verweilzeit von 35 sec als einziger in der obigen Gruppe.

### Beispiel 6 (erfindungsgemäß)

Beschrieben wird die Reaktivität des Lackes gemäß Beispiel 4 in Abhängigkeit von unterschiedlichen Katalysatormengen bei relativ niedrigen Einbrennbedingungen.

| **Lack** | **1c** | **1a** | **1d** |
|---|---|---|---|
| Blockierungsmittel | Ethanol | Ethanol | Ethanol |
| Swedstab OTO-133 bezogen auf Festkörper-Bindemittel | 1,0 Gew.-% | 2,0 Gew.-% | 3,0 Gew.-% |
| Reaktivität (MEK-Wischtest) bei | | | |
| PMT 216°C / 33 sec | - | 50 | 60 |
| PMT 224°C / 35 sec | 10 | 100 | 100 |

Wie man sieht, kann man auch durch Erhöhung des Katalysators auf 3 Gew.-% pro Festkörper-Bindemittel eine Vernetzung bei einer Objekttemperatur von 216°C/33 sec nicht erzwingen.

### Beispiel 7 (Vergleichsbeispiel)

Beschreiben wird der Vergleich von Weißlacken mit einem Ethanol-blockierten Vernetzer und einem analogen Butanonoxim-blockierten Vernetzer.

Bei dem nachfolgenden Lack 4 wird in dem Weißlack gemäß Beispiel 4 der Vernetzer mit Ethanol als Blockierungsmittel gegen einen solchen mit Butanonoxim als Blockierungsmittel ausgetauscht. Auch die Katalysatormenge wird reduziert.

| **Lack** | **1a (gemäß Beisp. 4)** | **4** |
|---|---|---|
| Blockierungsmittel | Ethanol | Butanonoxim |
| Swedstab OTO-133 bezogen auf Festkörper-Bindemittel | 2 Gew.-% | 1 Gew.-% |
| Reaktivität (MEK-Wischtest) bei PMT 224°C / 35 sec | 100 | 100 |
| PMT 216°C / 33 sec | 50 | 100 |
| Weißgrad n. Berger unter Überbrennbedingungen PMT 232°C / 38 sec (Ausgangswert) | 94 | 94 |
| + 120 h bei 120°C | 82,0 | 80,9 |
| + 24 h bei 150°C | 80,5 | 72,9 |

Wie man sieht, ist der mit Butanonoxim blockierte Weißlack 4 reaktiver als der mit Ethanol blockierte Weißlack 1a), denn bei einer Objekttemperatur von 216°C / 33 sec besteht Lack 4 den MEK-Wischtest, Lack 1a hingegen nicht mehr. Allerdings vergilbt der Butanonoxim-haltige Lack 4 unter Überbrennbedingungen stärker als Lack 1a), was in der stärkeren Abnahme der Weißwerte zum Ausdruck kommt.

Die beiden Weißlacke 1a) und 4 wurden auch unter Einbrennbedingungen, wie sie in der Automobillackierung üblich sind, getestet, nämlich bei 140°C / 30 min.

| **Lack** | **1a (gemäß Beisp. 4)** | **4** |
|---|---|---|
| Blockierungsmittel | Ethanol | Butanonoxim |
| Swedstab OTO-133 bezogen auf Festkörper-Bindemittel | 2 Gew.-% | 1 Gew.-% |
| Reaktivität (MEK-Wischtest) bei 140°C / 30 min | - | 100 |

Unter diesen ganz anderen Einbrennbedingungen, wo keine Einbrenntemperatur von ≥ 224°C zum Tragen kommt, versagt der Lack 1a) mit der Alkoholblockierung völlig.

## Patentansprüche

1. Coil Coating-Lackbindemittel aus mit aliphatischen Alkoholen blockierten, aliphatischen Polyisocyanaten und organischen Polyhydroxylverbindungen, **dadurch gekennzeichnet, dass**
c) der aliphatische Alkohol einen Siedepunkt bis zu 120°C besitzt und
d) das Lackbindemittel 1,2 bis 4,0 Gew.-% bezogen auf den Festkörper der Bindemittelkomponenten, an Katalysatoren aus der Gruppe der 4-wertigen organischen Zinnverbindungen enthält.

2. Coil Coating-Lackbindemittel nach Anspruch 1, **dadurch gekennzeichnet, dass** sie als Katalysator 1,5 bis 2,5 Gew.-% organische Zinn(IV)verbindungen enthalten.

3. Coil Coating-Lackbindemittel nach Anspruch 1, **dadurch gekennzeichnet, dass** das polyfunktionelle Hydroxylgruppentragende Harz ein Polyester ist.

4. Coil Coating-Lackbindemittel nach Anspruch 1, **dadurch gekennzeichnet, dass** das polyfunktionelle Hydroxylgruppentragende Harz ein Polyacrylat ist.

5. Coil Coating-Lackbindemittel nach Anspruch 1, **dadurch gekennzeichnet, dass** das polyfunktionelle Hydroxylgruppentragende Harz eine Mischung aus Polyester und Polyacrylat ist.

6. Coil Coating-Lackbindemittel nach Anspruch 1, **dadurch gekennzeichnet, dass** Ethanol als Blockierungsmittel für die Polyisocyanate eingesetzt wird.

7. Verwendung von Coil Coating-Lackbindemitteln nach Anspruch 1 zur Lackierung von Blechen.

## Claims

1. Coil coating lacquer binders comprising of aliphatic polyisocyanates blocked with aliphatic alcohols and organic polyhydroxyl compounds, **characterised in that**
a) the aliphatic alcohol has a boiling point of up to 120°C and
b) the lacquer binder contains 1.2 to 4.0 wt.%, relative to the solids content of the binder components, of catalysts from the group consisting of tetravalent organotin compounds.

2. Coil coating lacquer binders according to claim 1, **characterised in that** they contain 1.5 to 2.5 wt.% organotin(IV) compounds as catalyst.

3. Coil coating lacquer binders according to claim 1, **characterised in that** the polyfunctional hydroxyl group-carrying resin is a polyester.

4. Coil coating lacquer binders according to claim 1, **characterised in that** the polyfunctional hydroxyl group-carrying resin is a polyacrylate.

5. Coil coating lacquer binders according to claim 1, **characterised in that** the polyfunctional hydroxyl group-carrying resin is a mixture of polyester and polyacrylate.

6. Coil coating lacquer binders according to claim 1, **characterised in that** ethanol is used as blocking agent for the polyisocyanates.

7. Use of coil coating lacquer binders according to claim 1 for lacquer coating of sheet metal.

## Revendications

1. Liant pour produits de revêtement pour application continue sur tôle déroulée (coil coating) consistant en polyisocyanates aliphatiques bloqués par des alcools aliphatiques et composés organiques polyhydroxylés, **caractérisé en ce que**
c) l'alcool aliphatique a un point d'ébullition pouvant aller jusqu'à 120°C et
d) le liant pour produits de revêtement contient 1,2 à 4,0 % du poids total des matières solides de ses composants, de catalyseurs du groupe des composés organiques de l'étain tétravalent.

2. Liant pour produits de revêtement pour coil coating selon revendication 1, **caractérisé en ce qu'**il contient en tant que catalyseurs 1,5 à 2,5 % en poids de composés organiques de l'étain tétravalent.

3. Liant pour produits de revêtement pour coil coating selon revendication 1, **caractérisé en ce que** la résine polyfonctionnelle à groupes hydroxy est un polyester.

4. Liant pour produits de revêtement pour coil coating selon revendication 1, **caractérisé en ce que** la résine polyfonctionnelle à groupes hydroxy est un polyacrylate.

5. Liant pour produits de revêtement pour coil coating selon revendication 1, **caractérisé en ce que** la résine polyfonctionnelle à groupes hydroxy consiste en un mélange d'un polyester et d'un polyacrylate.

6. Liant pour produits de revêtement pour coil coating selon revendication 1, **caractérisé en ce que** l'on utilise l'éthanol en tant qu'agent bloquant des polyisocyanates.

7. Utilisation des liants pour produits de revêtement pour coil coating selon revendication 1 pour le revêtement de tôles métalliques.
